# EUROPÄISCHE PATENTSCHRIFT

(11) **EP 2 971 785 B1**
(45) Veröffentlichungstag und Bekanntmachung des Hinweises auf die Patenterteilung: **03.08.2022**
(21) Anmeldenummer: 14715208.6
(22) Anmeldetag: 12.03.2014
(51) Int. Cl.: F04D 13/06, F04D 29/041, F04D 29/047, B29C 45/16, F16C 33/20, F16C 35/02, H02K 5/02, H02K 5/167, H02K 5/08, H02K 7/08

(54) **PUMPENAGGREGAT MIT EINER EINSTÜCKIGEN LAGEREINHEIT**
PUMPING UNIT WITH ONE-PIECE BEARING DEVICE
POMPE AVEC PALIER MONOBLOC

(30) Priorität: 14.03.2013 DE 102013004339
(43) Veröffentlichungstag der Anmeldung: 20.01.2016
(73) Patentinhaber: WILO SE, 44263 Dortmund (DE)
(72) Erfinder: KÜSTER, Bernd, 44379 Dortmund (DE); SURA, Hendrik, 44229 Dortmund (DE); STOCK, Bernd-Thorsten, 44137 Dortmund (DE); ZINZIUS, Jürgen, 44287 Dortmund (DE)
(74) Vertreter: Cohausz Hannig Borkowski Wißgott
(86) Internationale Anmeldenummer: PCT/EP2014/000655
(87) Internationale Veröffentlichungsnummer: WO 2014/139676

(56) Entgegenhaltungen:
- EP-A1- 0 551 550
- EP-A2- 1 703 135
- CH-A- 541 726
- DE-A1- 4 311 634
- DE-A1-102006 045 781
- DE-T2- 60 004 642
- FR-A5- 2 100 172
- FR-E- 87 391
- GB-A- 2 322 095
- JP-A- H05 133 422
- JP-A- S62 215 123
- US-A1- 2005 106 015

## Beschreibung

### Pumpenaggregat mit einer einstückigen Lagereinheit

Die vorliegende Erfindung betrifft ein Pumpenaggregat, insbesondere eine Nassläuferpumpe für eine Heizungs- oder Trinkwasseranlage, mit einem einen Pumpenraum begrenzenden Pumpengehäuse, einem Elektromotor und einer den Rotor des Elektromotors tragenden Welle, die von zumindest einer in einem Spaltrohr befestigten Lagereinheit gelagert ist, durch die sich die Welle hindurch erstreckt, wobei die Lagereinheit aus einem Gleitlager und einem Lagerträger gebildet ist und einen das Gleitlager bildenden, die Welle lagernden inneren Bereich sowie einen den Lagerträger bildenden, im Spaltrohr gehaltenen äußeren Bereich aufweist.

Ein Pumpenaggregat dieser Art ist aus der französischen Veröffentlichung Nr. FR 87 391 E bekannt. Wie diese Schrift zeigt, sind in heutigen Pumpenaggregaten die Komponenten derartiger Lagereinheiten meist aufgrund ihrer funktionalen Eigenschaften strukturell unabhängig voneinander und werden in einzelnen, voneinander unabhängigen Herstellungsschritten gefertigt. Die Gleitlager sind in der Regel aus Graphit, Metall oder einem verschleißfesten Kunststoff, wohingegen der das Gleitlager form- oder kraftschlüssig aufnehmende Lagerträger aus einem konventionellen, verschleißbehafteten Kunststoff oder Metall gefertigt ist.

Im Allgemeinen ergeben sich bei derartigen Baugruppen aus mehreren Komponenten größere Toleranzen, insbesondere infolge der Addition von Toleranzen der Einzelkomponenten. Des Weiteren sind ein oder mehrere Montageschritte erforderlich, in dem die Komponenten zusammengefügt werden, beispielsweise durch Einpressen des Kohlelagers in den Lagerträger. Gegebenenfalls sind auch zusätzliche Befestigungskomponenten, beispielweise Elastomerkomponenten, Metallklammern/Metallkomponenten, Kunststoffklammern/Kunststoffkomponenten erforderlich, um das Lager in dem Lagerträger oder den Lagerträger innerhalb des Pumpenaggregats zu fixieren. Schließlich ist zumeist auch eine nachträgliche mechanische Bearbeitung der hergestellten Einzelkomponenten erforderlich, insbesondere wenn eine Verbindung mit weiteren Komponenten, beispielsweise ein Lagerschild an dem Lagerträger gewünscht ist. Ein Kohlelager wird vor dem Montageprozess bearbeitet, z.B. durch Glätten der Oberfläche, Anfasungen etc. Oftmals müssen insbesondere metallische Lagerschilde noch mechanisch bearbeitet werden, beispielsweise durch Drehen oder Fräsbearbeitung, um einen hinreichend genauen Lagersitz zur Aufnahme von Kohlelagern oder Kunststofflagern etc. zu ermöglichen. Es ist zu beachten, dass die mechanische Bearbeitbarkeit von Kohlelagern limitiert ist.

Aus der Patentanmeldung US 2005/0106015 A1 ist eine Nassläuferpumpe bekannt, deren Welle aus Kunststoff mit Additiven wie PTFE oder Kohlefasern besteht, um an den Lagerstellen die Reibung zu minimieren. Die Lagerung der Welle erfolgt einerseits innerhalb einer Buchse, die im Boden des Spalttopfes ausgebildet ist, andererseits an einem pumpenseitigen Lagerschild, das den Rotorraum abdeckt und für die Lagerung eine koaxiale Hülse außerhalb des Rotorraums aufweist. Das Spaltrohr geht pumpenseitig in einen Flansch über, der gemeinsam mit dem Lagerschild zwischen das Motor- und das Pumpengehäuse geklemmt ist. Das Lagerschild umgreift den Spaltrohrflansch an einer hierzu vorgesehen Schulter außenumfänglich. Die Lagerfläche der Hülse und der Buchse können metallisch oder beschichtet sein mit einem harten oder weichen Polymer wie PEEK.

Die schweizer Patentschrift CH 541 726 A beschreibt eine Wellenlagerung für eine stopfbuchsenlose Heizungsumwälzpumpe, bei der ein den Rotorraum und den Statorraum gleichzeitig abdeckender Pumpendeckel als pumpenseitiges Lager der Motorwelle dient. Hierzu weist es eine zylindrische Lagerschale auf, durch die die Welle geführt ist. Pumpendeckel und Lagerschale sind einstückig aus demselben Material. Das Spaltrohr ist über einen O-Ring am Pumpendeckel befestigt.

Die europäische Patentanmeldung EP 1 703 135 A2 offenbart eine Kreiselpumpe mit einem Spaltrohr einem pumpenseitig daran angeformten flanschförmigen Lagerschild, das den Motorstatorraum von der Pumpenkammer trennt, und einen pumpenseitig in Höhe des Lagerschildes koaxial am Spaltrohr angeformten buchsenförmigen Lagersitz, der ein Lager für die Motorenwelle trägt. Spaltrohr und Lagersitz sind somit einstückig. In den Lagersitz ist ein Lager eingesetzt.

Die deutsche Offenlegungsschrift DE 43 11 634 A1 offenbart ein hülsenförmiges Gleitlager und dessen Herstellungsverfahren. Das Gleitlager hat eine zur Rotationsachse weisende Gleitfläche, eine aus einem polymeren, gute Gleiteigenschaften aufweisenden Material bestehenden dünne Gleitschicht aus einem polymeren Material, die durch einen Spritzgieß-, Spritzpreß- oder Spritzblasprozeß hergestellt ist, und einen diese Gleitschicht umgebenden Träger, ebenfalls aus polymerem Material. Die innere Gleitschicht ist ohne Zusatz von faserigen, kugelförmigen und/oder partikelförmigen abrasiven Füllstoffen. Der äußere Träger besteht aus einem hartem oder weichelastischen Polymer, wobei Gleitschicht und Trägers stoff- und/oder formschlüssig verbunden sind. Dabei ist eine Auftrennung der Gleitschicht in radialer Richtung des Gleitlagers an mindestens einer Stelle am Umfang der Gleitschicht vorgesehen, um diese(n) Trennschlitz(e) -fuge(n) mit dem Material des Trägers auszufüllen. Dies bewirkt, dass sich die Materialschwindung des Trägers nach seinem Erkalten nicht mehr auf den Innendurchmesser der Gleitschicht auswirkt.

Eine mit Kunststoff-Lagerbuchsen versehene Nassläuferpumpe ist aus EP 0 551 550 A1 bekannt.

Es ist Aufgabe der vorliegenden Erfindung, die genannten Nachteile zu überwinden und eine Lagereinheit für ein Pumpenaggregat bereitzustellen, die hochbelastbar ist und bei der unter Reduzierung der Toleranzen eine hochpräzise Fertigung einer ganzen Baugruppe vorliegt und gleichzeitig der Montageaufwand und entsprechende Herstellungs- und Montagekosten reduziert werden.

Diese Aufgabe wird durch ein Pumpenaggregat mit den Merkmalen des Anspruchs 1 gelöst. Vorteilhafte Weiterbildungen des Pumpenaggregats respektive der Lagereinheit sind in den Unteransprüchen genannt Erfindungsgemäß wird ein Pumpenaggregat, insbesondere eine Nassläuferpumpe für eine Heizungs- oder Trinkwasseranlage, mit einem einen Pumpenraum begrenzenden Pumpengehäuse, einem Elektromotor und einer den Rotor des Elektromotors tragenden Welle vorgeschlagen, die von zumindest einer in einem Spaltrohr befestigten Lagereinheit gelagert ist, durch die sich die Welle hindurch erstreckt, wobei die Lagereinheit einstückig aus Kunststoff spritzgegossen ist und aus einem Gleitlager und einem im Spaltrohr montierten Lagerträger gebildet ist, wobei die Lagereinheit einen das Gleitlager bildenden, die Welle lagernden inneren Bereich sowie einen den Lagerträger bildenden, im Spaltrohr gehaltenen äußeren Bereich aufweist, und nur der das Gleitlager bildende innere Bereich eine Schicht des Lagerträgers aus einem tribologisch wirksamen Material ist.

Ein tribologisch wirksamer Kunststoff, respektive ein tribologisch wirksames Material ist insbesondere ein solcher Kunststoff bzw. ein solches Material, der/ das hinsichtlich seiner Verschleißfestigkeit, d.h. hinsichtlich ihres Abriebs, optimiert ist, d.h. verschleißfrei oder zumindest verschleißgemindert ist. Darüber hinaus besitzt ein tribologisch wirksamer Kunststoff bzw. ein tribologisch wirksames Materialauch eine schmierende Wirkung und eine reduzierte Haftreibung. Die

Lagereinheit besitzt damit eine integrierte tribologische Funktion. "Tribologisch wirksam" bedeuet in diesem Zusammenhang, dass das Kunststoffmaterial von sich aus bereits eine tribologische Funktion besitzt oder tribologisch optimiert ist, beispielsweise durch Hinzufügung bestimmter nanoskaliger und/ oder mikroskaliger Füllstoffe, was nachfolgend erläutert ist.

Unter einer einstückigen Lagereinheit ist im Sinne der Erfindung eine solche Baugruppe zu verstehen, die ein einziges Bauteil bildet, d.h. in dem die einzelnen Komponenten untrennbar, insbesondere stoffschlüssig miteinander verbunden sind. Aufgrund der Einstückigkeit von Lagerträger und Gleitlager kann die Lagereinheit mit geringeren Toleranzen präzise gefertigt werden. Ferner bietet die Herstellung der Lagereinheit aus Kunststoff freiere Formgebungsspielräume. Eine nachträgliche Bearbeitung entfällt bei der einstückigen Lagereinheit völlig.

Bei der Lagereinheit bildet der Lagerträger eine mechanische Stützstruktur für das Gleitlager, die einen äußeren Bereich der Lagereinheit bildet. Der Lagerträger umgibt das Gleitlager koaxial und ist zur Montage in einem Spaltrohr vorgesehen. Der Lagerträger dient folglich der mechanischen Befestigung der Lagereinheit in dem Pumpenaggregat. Entsprechend wird das Gleitlager durch den radial innenliegenden Bereich des Lagerträgers gebildet, der für eine tribologische Beanspruchung optimiert ist. Zur Welle hin besitzt das Gleitlager eine tribologisch wirksame Oberfläche, die eine Lauffläche für die Welle ist, wobei im Betrieb des Pumpenaggregats zwischen Lauffläche und Welle ein flüssigkeitsgefüllter Lagerspalt vorliegt.

Die Lagereinheit eignet sich für den Einsatz in einer Nassläuferpumpe, d.h. bei einem nasslaufenden Elektromotor. Bei diesem Motortyp ist der Rotorraum vom Stator durch ein Spaltrohr, insbesondere einen Spalttopf hermetisch getrennt. Die Lagereinheit ist am Spaltrohr des nasslaufenden Elektromotors befestigt.

Sie ist insbesondere in axialer Richtung betrachtet zwischen den elektromagnetisch wirksamen Komponenten des Elektromotors (Rotor, Stator) und dem Pumpenraum angeordnet.

Vorzugsweise ist an dem Lagerträger ein sich von diesem im Wesentlichen radial nach außen erstreckender Flansch einstückig angeformt. Dieser Flansch kann beispielsweise ringscheibenförmig als Lagerschild ausgebildet sein oder sich in Form eines schmalen Kragens vom Lagerträger weg erstrecken. Das Lagerschild schützt das Lager und bildet eine Trennung zwischen Elektromotor und Pumpenraum. Als Kragen bildet der Flansch einen Anschlag, wenn der Lagerträger in ein Spaltrohr oder in einen Spalttopf eingesetzt wird. Durch die Integration des Flansches in die Lagereinheit wird ein weiteres, separat herzustellendes Bauteil einschließlich entsprechender zusätzlicher Montageschritte eingespart.

In einer nicht erfindungsgemäßen Ausführungsvariante ist die Lagereinheit materialeinstückig ausgeführt. Dies bedeutet, dass sie vollständig aus einem einzigen tribologisch wirksamen Kunststoffmaterial, beispielsweise PEEK, spritzgegossen ist, das in einem einzigen Spritzgießvorgang sowohl den Lagerträger als auch das Gleitlager ausbildet. Der Lagerträger besteht gemäß dieser Ausführungsvariante folglich nicht aus einem ersten Kunststoffmaterial und das Gleitlager aus einem zweiten Kunststoffmaterial. Vielmehr sind diese Komponenten aus demselben Material. Aus diesem Grunde ist das Gleitlager physisch von dem Lagerträger nicht zu unterscheiden. Die zur Welle gerichtete Innenseite des Lagerträgers bildet damit gleichzeitig die Lauffläche des Gleitlagers.

Unter einem einzigen Kunststoffmaterial in diesem Sinne wird auch ein Kompositmaterial verstanden, das aus der Mischung von zwei oder mehr verschiedenen Kunststoffen bestehen kann. Dabei kann beispielsweise ein tribologisch nicht wirksames Kunststoffgrundmaterial verwendet werden, dass durch zumindest ein hinzugefügtes tribologisch wirksames Material optimiert ist, d.h. verschleißfester ist als das Kunststoffgrundmaterial selbst. Alternativ können auch beide oder alle Kunststoffmaterialien des Kompositmaterials tribologisch wirksam sein.

Gemäß der erfindungsgemäßen Ausführungsvariante besteht die Lagereinheit aus mindestens zwei verschiedenen Materialkomponenten. Erfindungsgemäß besteht sie aus zwei Kunststoffmaterialen, wobei der Lagerträger aus einem ersten und die das Gleitlager bildende Schicht aus einem zweiten Kunststoffmaterial ausgebildet sind. Diese beiden Kunststoffmaterialien bilden Verbindungspartner, die durch eine Mischung aus einem Stoffschluss und einem Kraftschluss zusammengehalten werden, so dass eine Einstückigkeit der Lagereinheit vorliegt. So besteht das erste, den Lagerträger ausbildende Kunststoffmaterial aus einem festen, hohe mechanische Stabilitätseigenschaften aufweisenden Material zur Aufnahme von radialen und vorzugsweise auch axialen Kräften, erfindungsgemäß durch die Verwendung von Faserverstärkungen in besagtem Kunststoff. Das erste Kunststoffmaterial muss jedoch nicht unbedingt eine tribologische Eigenschaft besitzen, da es nicht die Lagerung der Welle übernimmt. Dagegen ist das zweite, das Gleitlager ausbildende Kunststoffmaterial der tribologisch wirksame, insbesondere optimierte Kunststoff.

Durch den kombinierten Stoff-/ Kraftschluss sind die beiden Verbindungspartner zwar grundsätzlich untrennbar miteinander verbunden, bzw. können nicht zerstörungsfrei voneinander getrennt werden. Der Stoffschluss zwischen den beiden Verbindungspartnern könnte jedoch aufgehoben werden, wenn es zu einem rückartigen Blockieren der Welle im Lagerspalt kommt. Aus diesem Grunde kann zwischen den Verbindungspartnern zusätzlich ein Formschluss vorhanden sein, beispielsweise in Gestalt einer Profilierung an der zur Welle gerichteten Innenseite des Lagerträgers.

Der Lagerträger und das Gleitlager bestehen aus zwei verschiedenen Kunststoffmaterialen, wobei dann zumindest dem das Gleitlager ausbildenden Kunststoffgrundmaterial wenigstens ein tribologisch wirksames Material, d.h. ein verschleißmindernd und schmierend wirkendes Material beigemischt ist. Bei der Verwendung von zwei verschiedenen Kunststoffmaterialen, die dasselbe Kunststoffgrundmaterial besitzen, kann sich eine besonders starke und gute stoffliche Verbindung zwischen Gleitlager und Lagerträger ausbilden.

Das beigemischte Material kann beispielsweise Siliziumcarbid (SiC), Titandioxid (TiO₂), Zinksulfid (ZnS), Boroxid, Bornitrit und/ oder CNT (Carbon Nanotubes) in Form von Nanopartikeln sein. Die Gewichtsanteile können bei den genannten Materialen beispielsweise zwischen 0,1 Vol.% (Volumenprozent) bis 20 Vol.% betragen, vorzugsweise zwischen 1,0 Vol.% und 10 Vol.%. Die durchschnittliche Partikelgröße der genannten Nanopartikel beträgt bevorzugt zwischen 1nm und 100nm. Auch ist die Verwendung von zwei oder mehr verschiedenen der genannten Nanopartikelgrößen und/ oder Nanopartikelarten möglich, insbesondere Nanopartikel einer ersten Art in der Größenordnung 1-20nm in Kombination mit Nanopartikeln einer zweiten Art in der Größenordnung 20nm bis 100nm. Besonders hervorzuheben sind sogenannte CNTs als nanoskaliger Füllstoff, insbesondere MWCNTs (Multi-wall-CNTs), die sich als besonders verschleißmindernd herausgestellt haben.

Alternativ oder zusätzlich kann dem das Gleitlager bildenden Kunststoffmaterial wenigstens ein Mikrofüllstoff zugesetzt sein. Hinsichtlich der Form kann dieser Mikrofüllstoff als Fasern, Kugeln, Plättchen und/ oder Flocken (Flakes) vorliegen. Im Falle von Fasern können beispielsweise Kohlefasern, Aramidfasern und/ oder Keramikfasern (Aluminiumoxid) zur Anwendung kommen, jedoch keine Glasfasern. Der Faserdurchmesser kann zwischen 1µm und 20µm betragen, die Faserlänge im Bereich zwischen 5µm und 1000µm liegen, wobei die Faserlänge abhängig vom Verarbeitungsprozess ist und zu berücksichtigen ist, dass sich stets eine Faserlängenverteilung einstellt. Im Falle von Kugeln, Plättchen und/ oder Flakes (Flocken) sind 5-40 Gewichtsprozent (Gew.-%) mit Abmessungen zwischen 1 und 1000µm geeignet.

Hinsichtlich des Materials kann als Mikrofüllstoff bevorzugt Graphit mit einem Anteil von 5-40 Gew.-%, vorzugsweise 10 Gew.-% verwendet werden. Dies wirkt als Schmierstoff und verbessert die Trockenlaufeigenschaften des Gleitlagers. Alternativ oder zusätzlich kann der Mikrofüllstoff oder ein weiterer Mikrofüllstoff aus einem keramischen Material sein. Ferner kann anstelle oder zusätzlich zu Graphit Molybdänsulfid (MoS₂) verwendet werden, dass ebenfalls als Schmierstoff wirkt.

Es sei angemerkt, dass es natürlich auch möglich ist, dass die Kunststoffmaterialien, bzw. Kunststoffgrundmaterialien, oder zumindest eine dieser Materialien aus einem Kompositmaterial besteht, d.h. aus einer Mischung von mehreren Kunststoffen unterschiedlicher Matrix.

Besonders bevorzugt, kann das das Gleitlager ausbildende Kunststoffmaterial eine Kombination verschiedener Füllstoffe enthalten, insbesondere Füllstoffe unterschiedlicher Form, Füllstoffe unterschiedlicher Größe und/ oder Füllstoffe unterschiedlicher chemischer Stoffe. Eine besonders vorteilhaftes Kunststoffmaterial für das Gleitlager besitzt beispielsweise zwischen 5 und 20, insbesondere 10 Gew.% Kohlefasern, zwischen 5 und 20, insbesondere 10 Gew% mikroskaligen Graphit und zwischen 5 und 10 Vol.% (Volumenprozent) Nanopartikel eines der oben genannten nanoskaligen Füllstoffe oder mehrerer nanoskaliger Füllstoffe. Ein anderes geeignetes Kunststoffmaterial umfasst 15-20 Gew-% Kohlefasern mit Durchmessern zwischen 5-10µm und Faserlängen bis 350µm sowie 5-10 Gew.% aus Bornitrit- und Boroxid-Nanopartikeln.

Das Gleitlager ist durch eine Schicht gebildet, wobei die Schicht auf dem Lagerträger oder der Lagerträger auf die Schicht aufgetragen sein kann. Es besitzt keine selbsttragende Struktur. Diese wird vielmehr durch den Lagerträger bereitgestellt. Die zur Welle gerichtete Innenseite des Lagerträgers trägt damit das Gleitlager. wird. Die Dicke der Schicht bzw. des Gleitlagers kann zwischen 0,8mm und 3mm betragen, vorzugsweise 1,0mm, 1,5mm, 1,75mm, 2,0mm oder 2,5mm. Das Dickenverhältnis von Gleitlager zu Lagerträger kann zwischen 1 : 1 bis 1 : 3,5 liegen.

Besonders vorteilhaft ist es, die Lagereinheit im 2-Komponenten-Spritzgussverfahren herzustellen, wobei das den Lagerträger ausbildende Kunststoffmaterial auf das das Gleitlager ausbildende Kunststoffmaterial gespritzt ist. Die Herstellung erfolgt dann auf ein und derselben Spritzgussmaschine mittels zwei verschiedener Spritzeinheiten, die nacheinander oder gleichzeitig das erste und das zweiten Kunststoffmaterial an der entsprechenden Stelle in die Kavität der Spritzgießmaschine einbringen. Dabei ist lediglich eine Öffnungs- und Schließbewegung erforderlich. Ein Verbringen eines aus dem ersten Kunststoffmaterial vorgefertigten Spritzlings in eine andere Spritzgussmaschine, in der dann das zweite Kunststoffmaterial an den Spritzling angespritzt wird, ist nicht erforderlich. Durch die Verwendung des 2-Komponenten Spritzgussverfahrens ist eine einfache und preiswerte Herstellung der Lagereinheit möglich. Die Abmessungen des oder der tribologisch beanspruchten Bereichs bzw. der Bereiche der Lagereinheit können durch das Spritzgussverfahren, insbesondere durch Präzisionspritzguss, hinreichend genau geformt werden, so dass nachträgliche mechanische Bearbeitungsschritte gänzlich entfallen können.

Bevorzugt wird die einstückige Lagerungseinheit in einem 2-Komponenten Spritzgussverfahren derart hergestellt, dass zunächst in einer ersten Kavität eines Formwerkzeugs das Gleitlager gespritzt wird. An der ersten Einspritzposition mündet in die erste Kavität eine erste Einspritzdüse zum Einspritzen der ersten Materialkomponente. Als erste Materialkomponente wird das tribologisch wirksame Kunststoffmaterial, beispielsweise PEEK, verwendet, wobei der Lagerinnendurchmesser sehr präzise über einen formgebenden Werkzeugdorn (Werkzeugkern) ausgebildet werden kann. Zweckmäßigerweise wird die erste Materialkomponente bis zum Auswerfen des Fertigteils auf dem Werkzeugkern belassen. Über die erste Materialkomponente wird anschließend eine zweite Materialkomponente gespritzt. Hierfür können zwei Verfahren verwendet werden:

Beispielsweise wird der den Werkzeugdorn tragende Teil des Formwerkzeugs samt Gleitlager zu einer weiteren Einspritzposition gefahren, an der eine zweite Kavität vorliegt, die größer als die erste Kavität ist. An der zweiten Einspritzposition mündet in die zweite Kavität eine zweite Einspritzdüse zum Einspritzen der zweiten Materialkomponente. Hierfür kann der Werkzeugdorn zunächst aus der ersten Kavität zurückfahren, sodann zu der zweiten Einspritzposition bewegt und anschließend in die zweite Kavität eingefahren werden. Die Bewegung zu der zweiten Einspritzposition kann translatorisch erfolgen, wobei der Werkzeugdorn dann auf einem Schlitten oder Schieber montiert ist. Alternativ kann die Bewegung rotatorisch erfolgen, wobei der Werkzeugdorn dann auf einem Drehteller montiert ist.

Auf einem derartigen Schlitten oder Drehteller können dann auch zwei oder mehrere Werkzeugdorne montiert sein. Dies ermöglicht, dass beide oder gar mehrere Einspritzpositionen gleichzeitig in Betrieb sein können, d.h. an einer zweiten Einspritzposition eine Lagereinheit durch Einspritzen der zweiten Materialkomponente fertiggestellt werden kann, während an einer ersten Einspritzposition das Gleitlager gespritzt wird.

Alternativ zu den zwei Einspritzpositionen kann die (erste) Kavität nach dem Spritzen des Gleitlagers vergrößert werden. Dies ist durch die Verwendung beweglicher Formteile, insbesondere mehrerer Schieber, möglich, die die Kavität, beispielsweise in der Art einer Irisblende, außenumfänglich begrenzen. Die Schieber sind vorzugsweise entlang einer gekrümmten Bahn beweglich und können gemeinsam nach innen zur Werkzeugkernachse (Einfahrbewegung) oder nach außen von besagter Achse weg gedreht werden (Rückfahrbewegung). Durch Anwendung der Rückfahrbewegung wird die Kavität vergrößert und gibt dadurch Raum frei, der dann von der zweiten Materialkomponente ausgefüllt werden kann, welche die erste Materialkomponente formschlüssig umhüllt. Durch die Verwendung einer derartigen Technologie werden keine zwei Einspritzpositionen respektive keine zwei Spritzgussmaschinen benötigt. Nach dem Abkühlen der zweiten Materialkomponente auf eine Entformungstemperatur kann das fertige, einstückige Formteil entformt, d.h. ausgeworfen oder entnommen werden.

Im Falle eines 2-Komponenten-Spritzgussverfahrens (Mehrkomponentenspritzguss) wird eine enge formschlüssige Verbindung zwischen der das Gleitlager bildenden tribologischen Materialkomponente und der die tragende Struktur, d.h. den Lagerträger bildenden strukturellen Materialkomponente in einem einzigen Fertigungsschritt so gebildet, dass die einstückige Lagereinheit keiner zusätzlichen Montageschritte mehr bedarf und die Werkstoffpotentiale beider Komponenten optimal ausgenutzt werden können. Dies ist insbesondere dann vorteilhaft, wenn die tribologische Materialkomponente aufgrund Ihrer Materialzusammensetzung deutlich kostenintensiver ausfällt als die strukturelle Materialkomponente. Hier lässt sich über das 2-Komponenten-Spritzgussverfahren der Materiaeinsatz für die tribologisch wirksame Materialkomponente auf ein erforderliches Minimum reduzieren. Der voluminösere, strukturbildende Bauteilbereich der Lagereinheit, d.h. der Lagerträger, wird dann durch die kostengünstigere Materialkomponente geformt.

Als tribologisch wirksame Kunststoffmaterialen und Kunststoffgrundmaterialen können PEEK (Polyetheretherketon), PEK (Polyetherketon), PEI (Polyetherimid), PAI (Polyamidimid), PPE (Polyphenylenether), PPA (Polyphthalamid) oder Kombinationen daraus verwendet werden, wobei diese Materialien zusätzlich jeweils durch die zuvor genannten nanoskaligen und/ oder mikroskaligen Füllstoffe tribologisch optimiert sein können. Dies bedeutet, dass die das Gleitlager bildende Schicht aus einem der genannten Kunststoffmaterialen besteht, wohingegen der Lagerträger und vorzugsweise auch der Flansch, aus einem konventionellen Kunststoff gebildet sein kann, beispielsweise aus glasfaserverstärktem PP (Polypropylen), PPS (Polyphenylensulfid) oder PE (Polyelthylen). Diese Kunststoffe sind im Vergleich zu den zuvor genannten Kunststoffen preiswertere thermoplastische Kunststoffe. Erfindungsgemäß ist das den Lagerträger bildende Kunststoffmaterial faserverstärkt, beispielsweise mittels Kohlefasern, Glasfasern und/ oder Aramidfasern, um eine höhere mechanische Festigkeit zur Aufnahme radialer und gegebenenfalls auch axialer Kräfte zu erhalten.

Bevorzugt kann als tribologisch wirksames Kunststoffmaterial PEEK verwendet werden, das mit einem Anteil Kohlefasern und/ oder mit einem Anteil Graphit und/ oder mit den Nanofüllstoffen Titandioxid und/ oder Zinksulfid versetzt ist. PEEK besitzt bereits gute tribologische Eigenschaften, eine sehr gute Temperaturstabilität, eine hohe chemische Beständigkeit und ist zudem umweltverträglich. Kohlefasern ergänzen und verbessern diese Eigenschaften: so werden der Reibungskoeffizient reduziert, die Verschleißbeständigkeit erhöht, die mechanische Stabilität gestärkt und die thermische und elektrische Leitfähigkeit verbessert. Auch Graphit als Zusatzstoff in einer PEEK Matrix trägt zu einer Verbesserung und Ergänzung der Eigenschaften von PEEK bei: so werden auch hierdurch der Reibungskoeffizient reduziert, die Verschleißrate bei Trockenlauf reduziert, die elektrische Leitfähigkeit verbessert und dem PEEK antistatische Eigenschaften verliehen. Schließlich tragen auch die Nanopartikel zu einer signifikant verbesserten Verschleißbeständigkeit und zu einem deutlich reduzierten Reibungskoeffizienten bei. Hervorragende Eigenschaften konnten mit einem tribologisch wirksamen Kunststoffmaterial ermittelt werden, dass eine PEEK-Matrix, ca. 10% Kohlefasern, ca. 10% Graphit und Anteile von Titandioxid und Zinksulfid in Nanopartikeln aufwies.

Gemäß einer vorteilhaften Weiterbildung kann sich die das Gleitlager bildende Schicht bis auf eine oder beide axiale Stirnseite(n) der Lagereinheit erstrecken und dort eine tribologisch wirksame Oberfläche bilden. Dies bedeutet, dass die Schicht an der radialen Innenseite des Lagerträgers und die Schicht an der oder den axialen Stirnseite(n) aus demselben Material bestehen, insbesondere materialeinstückig ineinander übergehen. Dies hat den Vorteil, dass diese Stirnseite oder Stirnseiten als axiale Anlauffläche und damit als Axiallager zur Aufnahme axialer Kräfte fungieren kann/ können und der Verschleiß der Stirnseite minimiert wird. So kann die zum Pumpengehäuse gerichtete Stirnseite beispielsweise als feststehende Gleitfläche für eine mechanisch wirkende Dichtung fungieren, beispielsweise für eine Gleitringdichtung oder eine Lippendichtung, die insbesondere Teil des Pumpenaggregats ist. Ein weiterer Vorteil besteht darin, dass die tribologisch optimierte(n) Stirnseite(n) der Lagereinheit in einem Schritt, d.h. gleichzeitig mit der Ausbildung des Gleitlagers am Lagerträger, vorzugsweise bei dem 2-Komponentenverfahren erzeugt werden kann/können. Es sei angemerkt, dass alle bezüglich der radial innenseitig des Lagerträger liegenden Schicht beschriebenen Merkmale auch auf die Schicht einer oder beider axialen Stirnseiten zutreffen.

Erfindungsgemäß kann die vorgeschlagene Lagereinheit die Welle unmittelbar vor dem Pumpenraum lagern. Dies entspricht der sogenannten A-Seite des Pumpenaggregats. Der Flansch dient dabei dem Schutz des Lagers und der Stirnseite des Stators des Elektromotors. Alternativ kann die Lagereinheit endseitig innerhalb des Spaltrohres des Pumpenaggregats, das auch als Spalttopf ausgeführt sein kann, kraft- und/ oder formschlüssig montiert sein.

Der Lagerträger und der Flansch können insbesondere aus demselben Kunststoffmaterial oder unterschiedlichen Kunststoffen bestehen. Letzteres ist beispielsweise möglich, wenn die Herstellung der Lagereinheit in einem Mehrkomponenten-Spritzgussverfahren, insbesondere einem 2-Komponenten-Spritzgussverfahren erfolgt. Die Verwendung eines einzigen Kunststoffmaterials, das zur Materialeinstückigkeit von Lagerträger und Flansch führt, ist jedoch zu bevorzugen, weil Lagerträger und Flansch dann in einem einzigen Spritzgussschritt hergestellt werden können. Das Spritzgießverfahren und das entsprechende Spritzgießwerkzeug sind in diesem Fall einfacher ausgestaltet, und es ergibt sich eine übergangsfreie stoffliche Verbindung der strukturellen Komponenten Flansch und Lagerträger.

Der Flansch kann an einem Axialende, insbesondere dem zum Pumpenraum gerichteten axialen Ende des Lagerträgers angeformt sein. Dies bedeutet, dass sich die im Wesentlichen zylindrische Grundform des Lagerträgers dann in axialer Richtung von dem Flansch weg erstreckt, so dass der Lagerträger in das Spaltrohr des Pumpenaggregats in axialer Richtung eingeschoben werden kann.

Besonders vorteilhaft ist es, wenn der Flansch ein Lagerschild ist, das in einem Axialschnitt eine Querschnittsform aufweist, die in einem radialen Außenbereich in einer Radialebene zur Achse der Welle liegt und die sich in einem mittleren Abschnitt von dieser Radialebene mit zunehmender Nähe zur Welle entfernt, wobei die Querschnittsform an ihrem radial innenliegenden Endbereich annähernd bogenförmig in den Lagerträger übergeht. Von der Pumpenkammer aus betrachtet, besitzt das Lagerschild demgemäß zumindest bis zu besagtem bogenförmigen Abschnitt eine Art Trichterform. Diese geometrische Gestaltung des Lagerschildes besitzt besonders gute Stabilitätseigenschaften.

Vorzugsweise steht eine Stirnseite des Lagerträgers zumindest gegenüber einem radial innenliegenden Ende des Flansches in axialer Richtung vor. Dies bewirkt, dass besagter Vorstand eine Anlauffläche bilden kann, insbesondere eine feststehende Gegenlaufscheibe einer Gleitringdichtung des Pumpenaggregats bilden kann. Aus diesem Grunde ist es sinnvoll, wenn auch diese Stirnseite wie zuvor beschrieben, eine tribologisch wirksame Oberfläche besitzt.

Besonders vorteilhaft kann die vorstehende Stirnseite durch den bogenförmigen Übergang des Lagerschildes zum Lagerträger erreicht werden. Die zum Pumpenraum gerichtete Stirnseite des Lagerträgers steht dann gegenüber dem radial innenliegenden Ende des Lagerschildes in axialer Richtung hervor.

Zur Befestigung der Lagereinheit innerhalb der Pumpe weist der Lagerträger an einer Außenseite sich radial nach außen erstreckende Rippen auf, mittels welchen er in dem Spaltrohr des Pumpenaggregats gehalten ist. Die Rippen können sich bevorzugt parallel zur Achse der Lagereinheit erstrecken. Dabei ist es jedoch nicht erforderlich, dass sie sich entlang der gesamten axialen Länge des Lagerträgers erstrecken. Vielmehr können sie in einem Abstand vor einer oder beiden Stirnseite(n) des Lagerträgers enden, so dass der Lagerträger gegenüber den Rippen an zumindest einem Ende vorsteht. Hierdurch kann einerseits Kunststoffmaterial eingespart werden. Ferner ermöglich dies andererseits, dass eine oder beide Stirnseite(n) eine tribologisch wirksame Oberfläche besitzen und als Axiallagerfläche dienen kann/ können.

Insbesondere sind die Rippen einstückig an dem Lagerträger angeformt und bilden damit ein integrales Element der Lagereinheit. Besonders vorteilhaft ist es, wenn die die Rippen an einem Axialende in den Flansch, insbesondere das Lagerschild übergehen. Hierdurch wird eine höhere mechanische Stabilität im Übergangsbereich zwischen Lagerträger und Flansch erreicht. Es kann insbesondere eine Vielzahl von Rippen vorhanden sein. Vorzugsweise sind diese äquidistant entlang des Außenumfangs des Lagerträgers angeordnet, so dass die Lagereinheit zentriert in dem Spaltrohr montiert werden kann.

In einer bevorzugten Weiterbildung einer der vorgenannten Ausführungsvarianten kann der Lagerträger an seiner zur Welle gerichteten Innenseite eine Profilierung aufweisen, die von der Schicht vollständig ausgefüllt oder umgeben ist. Die Profilierung vergrößert die Kontaktfläche zwischen der dem Lagerträger zugewandten Fläche der tribologische Materialkomponente und dem Lagerträger. Hierdurch wird zusätzlich zu dem vorhandenen Stoffschluss zwischen Lagerträger und Gleitlager ein Formschluss und damit eine zusätzliche mechanische Stabilität der Schicht bzw. Beschichtung erreicht, wenn diese aus einem anderen Material bzw. Kompositmaterial besteht, als der Lagerträger. Der Formschluss verhindert ein Abscheren der tribologisch wirksamen Schicht vom umgebenden Lagerträgermaterial. Dies ist insbesondere bei der Verwendung von ungleichen stofflichen Materialien für das Gleitlager und den Lagerträger von Vorteil oder im Falle eines Blockierens zwischen der zu lagernden Welle und der radial nach innen gerichteten tribologisch wirksamen Fläche des Gleitlagers, beispielsweise infolge eines Verklebens oder Verschmutzens. Sollte folglich durch einen Fehlbetrieb des Pumpenaggregats eine form- oder kraftschlüssige Verbindung oder Anhaftung zwischen Welle und Lagerfläche (Lauffläche) entstehen, ist durch eine Profilierung gewährleistet, dass die tribologisch funktionale Schicht nicht vom Lagerträgermaterial losgerissen bzw. abgeschert wird und sich unbeabsichtigt mit der Welle mitdreht. Durch eine Profilierung zwischen dem Gleitlager und dem Lagerträger wird folglich eine besonders robuste und schadenstolerante Lagereinheit erreicht. Beispielsweise kann es sich bei der Profilierung um Nuten handeln. Bevorzugt erstrecken sich diese Nuten achsparallel, um ein unbeabsichtigtes Mitdrehen des abgescherten Gleitlagermaterials mit der Welle zu verhindern. Es sind jedoch auch andere Nutformen wie beispielsweise ringförmige Nuten möglich.

Zusätzlich oder alternativ zu den beschriebenen Merkmalen kann die Lagereinheit hutförmig ausgebildet sein, wobei der Lagerträger eine zylindrische Innenwand und eine zylindrische Außenwand aufweist, die an einem axialen Ende über einen ringförmigen Boden miteinander verbunden sind. Zwischen der Innenwand und der Außenwand kann vorzugsweise ein koaxialer Ringraum vorhanden sein. Ein Lagerträger dieser Form eignet sich besonders für die Montage auf der der Pumpeneinheit zugewandten Seite des Spaltrohres. Der Flansch kann dann einen am gegenüberliegenden anderen axialen Ende der Außenwand angeformter Kragen bilden, der einen Anschlag bei der Montage im Spaltrohr darstellt.

Weitere Vorteile und Eigenschaften des erfindungsgemäßen Pumpenaggregats respektive der Lagereinheit werden nachfolgend anhand von Ausführungsbeispielen gemäß den beigefügten Figuren erläutert. Der Schutzumfang der Erfindung ist jedoch ausschließlich durch die nachfolgenden Ansprüche bestimmt.

Es zeigen
Fig. 1a: axialer Querschnitt einer ersten Variante (nicht Teil der Erfindung) einer Lagereinheit mit Lagerschild in materialeinstückiger Ausführung
Fig. 1b: Perspektivische Halb-Schnittansicht der Ausführungsvariante gemäß Fig. 1a
Fig. 2a: axialer Querschnitt einer zweiten Variante (Teil der Erfindung) einer einstückigen Lagereinheit mit Lagerschild und einer ein Gleitlager bildenden tribologisch wirksamen Schicht innenseitig und an einer Stirnseite
Fig. 2b: radialer Querschnitt durch Ausführungsvariante gemäß Fig. 2a
Fig. 2c: Perspektivische Halb-Schnittansicht der Ausführungsvariante gemäß Fig. 2a
Fig. 2d: Perspektivische Halb-Schnittansicht einer Weiterbildung (Teil der Erfindung) der Ausführungsvariante gemäß Fig. 2a mit Nut
Fig. 3a: axialer Querschnitt einer dritten Variante (Teil der Erfindung) einer einstückigen Lagereinheit mit Lagerschild und einer ein Gleitlager bildenden tribologisch wirksamen Schicht innenseitig und an beiden Stirnseiten
Fig. 3b: Perspektivische Halb-Schnittansicht der Ausführungsvariante gemäß Fig. 3a
Fig. 4a: alternative Ausführungsvariante (nicht Teil der Erfindung) einer einstückigen Lagereinheit in perspektivischer Axialschnitt-Ansicht
Fig. 4b: axialer Querschnitt der Ausführungsvariante gemäß Fig. 4a

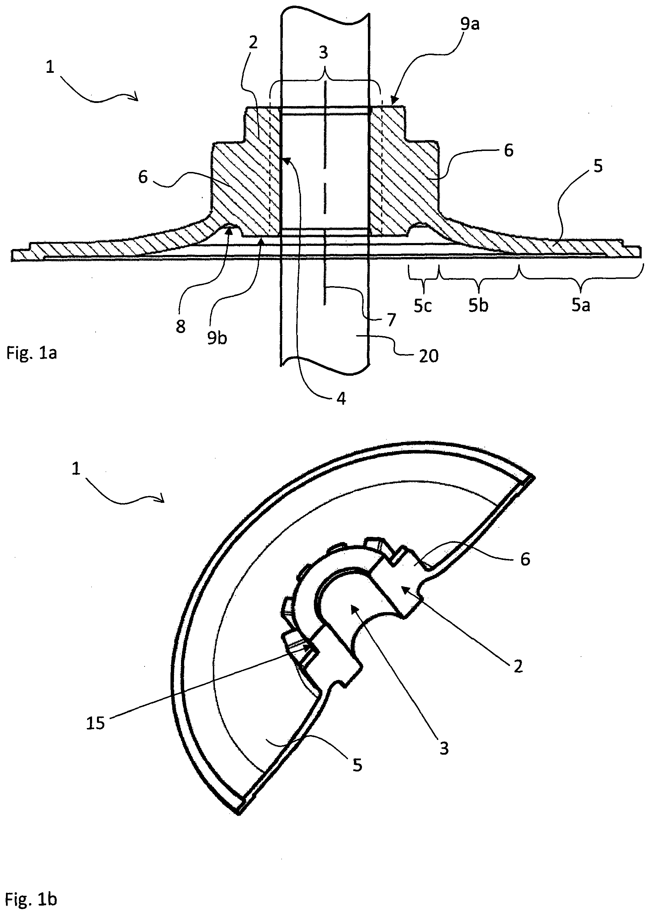

Fig. 1a und 1b zeigen eine erste Variante einer Lagereinheit 1 für ein nicht erfindungsgemäßes, nicht näher dargestelltes Pumpenaggregat, insbesondere für eine Heizungs- oder Trinkwasserpumpe, mit einem einen Pumpenraum begrenzenden Pumpengehäuse, einem nasslaufenden Elektromotor und einer den Rotor des Elektromotors tragenden Welle 20, die von zumindest einer derartigen Lagereinheit 1 gelagert ist, durch die sich die Welle 20 hindurch erstreckt. Fig. 1b zeigt eine perspektivische Halb-Schnittansicht dieser Ausführungsvariante. Die Lagereinheit 1 ist zur Befestigung in einem nicht dargestellten Spaltrohr vorgesehen. Sie weist einen inneren Bereich auf, der ein Gleitlager 3 bildet und die Welle 20 lagert, sowie einen äußeren Bereich auf, der den Lagerträger 2 darstellt und in dem Spaltrohr eingesetzt ist. Die Lagereinheit 1 ist vollständig aus einem tribologisch wirksamen Kunststoffmaterial hergestellt, so dass der Lagerträger 2 und das Gleitlager 3 materialeinstückig sind, wie dies im Stand der Technik bekannt ist.

Tribologisch wirksam bedeuet in diesem Zusammenhang, dass das Kunststoffmaterial von sich aus bereits eine tribologische Funktion besitzt oder tribologisch optimiert ist, beispielsweise durch Hinzufügung bestimmter nanoskaliger und/ oder mikroskaliger Füllstoffe. Aufgrund der Materialeinstückigkeit lässt sich keine physische Trennung zwischen dem Gleitlager 3 und dem Lagerträger 2 feststellen. Eine gestrichelte Linie zeigt in Fig. 1a an, wo in etwas der innere als Gleitlager wirkende Bereich endet und der äußere als Lagerträger 2 wirkende Bereich beginnt. Dadurch, dass die gesamte Lagereinheit 1 aus einem tribologisch wirksamen Material besteht, weist die zur Welle 20 gerichtete Innenseite 4 der Lagereinheit 1 eine tribologisch wirksame Oberfläche auf, die eine Lauffläche für die Welle 20 bildet.

Der Lagerträger 1 weist an seiner Außenseite 15 (siehe Fig. 1b) mehrere sich radial nach außen erstreckende Rippen 6 auf, mittels welchen er in dem nicht dargestellten Spaltrohr des Pumpenaggregats gehalten ist. Die Rippen 6 enden in einem Abstand vor dem axialen Ende des Lagerträgers 2, so dass dieses Ende einen vorspringenden Teil der Lagereinheit mit einer Stirnseite 9a bildet. Die Rippen weisen zudem vorzugsweise einen rechteckigen Querschnitt auf.

Ferner besitzt die Lagereinheit 1 ein sich von dem Lagerträger 2 im Wesentlichen radial nach außen erstreckenden Flansch in Gestalt eines Lagerschilds 5, das ebenfalls materialeinstückig mit dem Lagerträger 2 und den Rippen 6 ausgebildet ist. Das heißt, dass das Lagerschild 5 aus demselben Kunststoffmaterial besteht wie der Lagerträger 2. Das Lagerschild 5 ist an einem Axialende des Lagerträgers 2 angeformt, so dass die Lagereinheit 1 mit ihren Rippen 6 bis zum Lagerschildansatz in das Spaltrohr eingeschoben werden kann. Die Lagereinheit gemäß Fig. 1a, 1b ist folgemäßig für die A-Seite des Pumpenaggregats bestimmt, d.h. in axialer Richtung zwischen dem Elektromotor und dem Pumpenraum angeordnet.

Das Lagerschild 5 besitzt eine rotationssymmetrische Geometrie, die in einem Axialschnitt wie in Fig. 1a eine Querschnittsform aufweist, welche im radialen Außenbereich 5a in einer Radialebene zur Achse 7 der Welle 20 liegt und die sich in einem mittleren Abschnitt 5b von dieser Radialebene mit zunehmender Nähe zur Welle entfernt, wobei die Querschnittsform des Lagerschildes 5 an ihrem radial innenliegenden Endbereich 5c annähernd bogenförmig unter Ausbildung einer Auskehlung 8 in den Lagerträger 2 übergeht. Aufgrund der Auskehlung 8 besitzt der Lagerträger 2 eine in axialer Richtung vorstehende Stirnseite 9b.

Die gesamte Baugruppe bestehend aus Lagerträger 2 samt Rippen 6, Gleitlager 3 und Lagerschild 5 ist einheitlich aus demselben Kunststoffmaterial in einem Spritzgussschritt hergestellt und damit materialeinstückig. Damit der das Gleitlager 2 bildende innere Bereich tribologisch wirksam ist, d.h. bezüglich seines Abriebs im nassen oder trockenen Lauf verschleißfest ist und gute Schmiereigenschaften im Falle eines Trockenlaufs besitzt, ist die Lagereinheit 1 aus einem verschleißfesten Kunststoff, beispielsweise PEEK hergestellt, wobei zusätzlich in diesen Kunststoff noch Nanopartikel aus SiC, TiO₂, ZnS und/ oder CNT (Carbon Nanotubes) ein Mikrofüllstoff eingebracht sein können, beispielsweise aus keramischen Elementen in Form von Kugeln, Plättchen und/ oder Fasern. Der Vorteil einer materialeinstückigen Ausführung der Lagereinheit 1 liegt darin, dass sie über die tribologische Beanspruchung hinausgehend eine mechanische Belastung aufnehmen kann.

Für die Lagereinheit 1 hat sich ein Kunststoffmaterial aus PEEK mit ca. 10 bis 20 Gew.% Kohlefasern mit Durchmessern zwischen 5-10µm und Faserlängen bis 350µm, ca. 10 Gew% mikroskaligem Graphit und zwischen 5 und 10 Vol.% (Volumenprozent) Nanopartikel aus SiC, TiO₂, ZnS, Bornitrit oder Boroxid als vorteilhaft herausgestellt. Aufgrund der materialeinstückigen Ausbildung von Gleitlager und Lagerträger bilden auch die Stirnseiten 9a, 9b wie die zur Welle 20 gerichtete Innenseite 4 der des Gleitlagers 3 Bereiche mit tribologischer Funktion. So bewirkt die Innenseite 4 eine radiale Lagerung der Welle, die Stirnseiten 9a, 9b oder zumindest eine dieser Stirnseiten 9a, 9b werden für eine axiale Lagerung der Welle 20 verwendet. Demgegenüber bilden der Lagerträger 2 einschließlich der Rippen 6 und das Lagerschild 5 Bereiche struktureller Funktion.

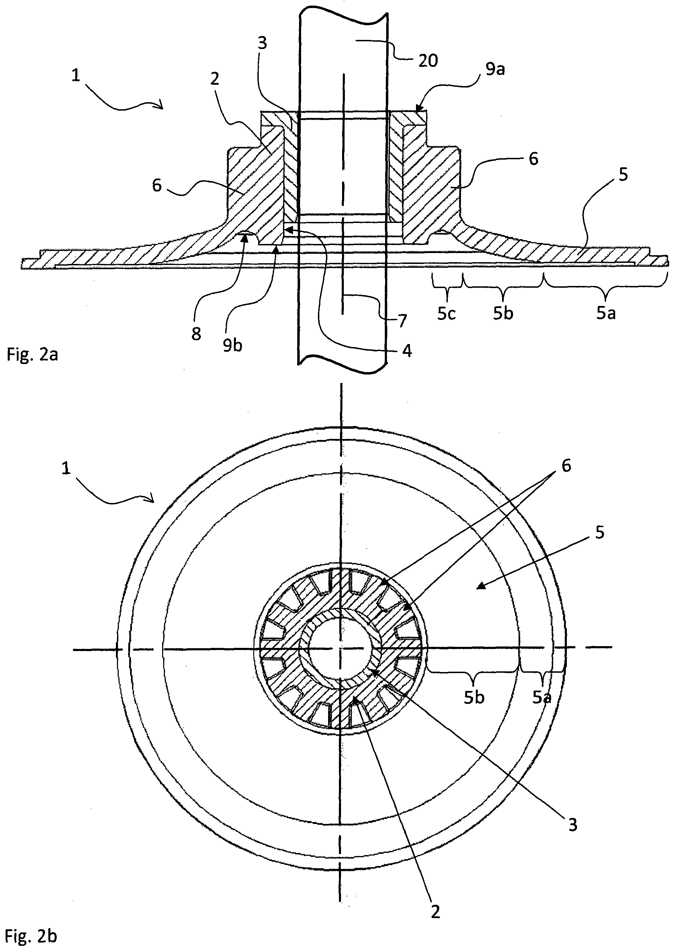

Fig. 2a zeigt einen axialen Querschnitt einer zweiten Variante einer einstückigen

Lagereinheit 1 für ein erfindungsgemäßes Pumpenaggregat . Gemäß dieser Variante ist das Gleitlager 3 als Schicht auf der zur Welle 20 gerichteten Innenseite 4 des Lagerträgers 2 ausgebildet. Die Außengeometrie der Lagereinheit, insbesondere hinsichtlich der Rippen 6 und des Lagerschildes 5 entspricht der Geometrie gemäß der ersten Ausführungsvariante in Fig. 1a und 1b.

Die Lagereinheit 1 gemäß dieser zweiten Variante ist zwar einstückig ausgebildet, so dass sie ein zusammenhängendes Bauteil aus nicht zerstörungsfrei voneinander trennbarer Teile bildet, sie ist jedoch nicht materialeinstückig. Vielmehr besteht die Lagereinheit 1 aus zwei Kunststoffmaterialen, wobei der Lagerträger 2 aus einem ersten und das Gleitlager 3 aus einem zweiten Kunststoffmaterial ausgebildet ist, die stoffschlüssig miteinander verbunden sind.

Das erste, den Lagerträger 2 bildende Kunststoffmaterial ist ein herkömmlicher thermoplastischer Kunststoff, beispielsweise PE, PP oder PPS, der vergleichsweise preiswert ist und volumenmäßig den größten Teil der Lagereinheit 1 ausmacht.

Erfindungsgemäß ist dieses erste Kunststoffmaterial zur Erhöhung der strukturellen Integrität faserverstärkt, beispielsweise mittels Kohle- oder Glasfasern. Das zweite, das Gleitlager 2 bildende Kunststoffmaterial ist ein tribologisch wirksamer thermoplastischer Kunststoff, beispielsweise tribologisch optimiertes PEEK, der im Vergleich zum ersten Kunststoffmaterial wesentlich teurer ist. Insbesondere kann hier das Kunststoffmaterial verwendet werden, das bei der ersten Variante angegeben ist. Da das zweite Kunststoffmaterial volumenmäßig einen viel geringeren Anteil an dem Gesamtvolumen der Lagereinheit 1 ausmacht, kann die zweite Ausführungsvariante wirtschaftlicher hergestellt werden, als die erste Variante, bei der die gesamte Lagereinheit 1 aus einem tribologischen Kunststoffmaterial gebildet ist.

Die zweite Ausführungsvariante ist in einem Zwei-Komponenten-Spritzgießprozess hergestellt, wie der zuvor beispielhaft erläutert wurde.

In der Ausführungsvariante gemäß Fig. 2a ist nicht nur die Innenseite 4 mit der verschleißfesten, das Gleitlager 3 bildenden Schicht versehen sondern auch diejenige Stirnseite des Lagerträgers 2, die gegenüber den Rippen 6 vorsteht. Die Schicht bildet dort eine ebene Oberfläche, sie selbst eine Stirnseite 9a aufweist, welche verschleißfest, d.h. tribologisch optimiert ist. Wie in Fig. 2a erkennbar ist, geht die das Gleitlager 3 bildende Schicht materialeinheitlich in die stirnseitig des Lagerträgers 2 vorhandene Schicht über. Das Gleitlager 3 bildet somit der Form nach eine Art Hülse mit einem endseitigen, radial nach außen gerichteten Kragen, der die Stirnseite des Lagerträgers 2 formschlüssig übergreift. Die Schicht, insbesondere der Kragen, bildet an der Stirnseite ein Axiallager, beispielsweise für eine axiale Lagerung der Welle 20 gegen eine Anlaufscheibe.

In einer nicht dargestellten Ausführungsvariante kann alternativ zu der Stirnseite, die gegenüber den Rippen 6 vorsteht, an der anderen Stirnseite, d.h. an der dem Pumpenraum zugewandte Stirnseite der Lagereinheit 1 die verschleißfeste Schicht vorgesehen sein. Diese bildet dann einen feststehenden Gegenring und gemeinsam mit einem vor der Lagereinheit 1 auf der Welle angeordneten Gleitring eine mechanische Dichtung in der Art einer Gleitringdichtung.

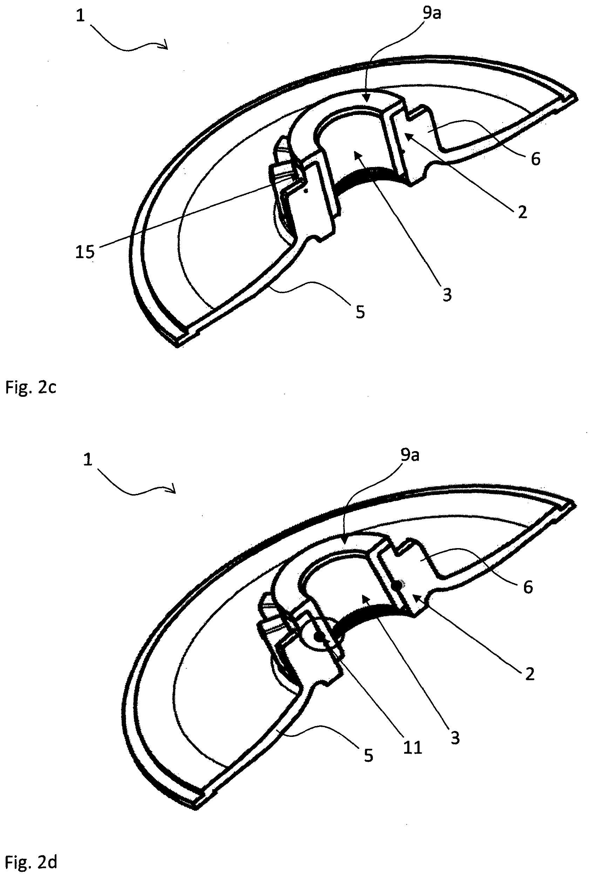

Fig. 2b zeigt einen radialen Querschnitt der Ausführungsvariante gemäß Fig. 2a. Ferner zeigt Fig. 2c eine perspektivische Halb-Schnittansicht der Ausführungsvariante gemäß Fig. 2a. Die Stirnseite 9a und das Gleitlager 3 sind durch die Verwendung eines verschleißfesten Kunststoffmaterials tribologisch optimiert.

Fig. 2d zeigt eine Weiterbildung der Variante gemäß den Figuren 2a bis 2c dahingehend, dass die Innenseite 4 des Lagerträgers 2 eine Profilierung 11 in Gestalt einer ringförmigen Nut, die hier beispielshaft axial mittig angeordnet ist. Diese ist vollständig mit dem das Gleitlager 3 bildenden Kunststoffmaterial ausgefüllt. Zusätzlich zu dem Stoffschluss zwischen dem Lagerträger 2 und dem Gleitlager 3 besteht somit im Bereich der Profilierung 11 ein Formschluss.

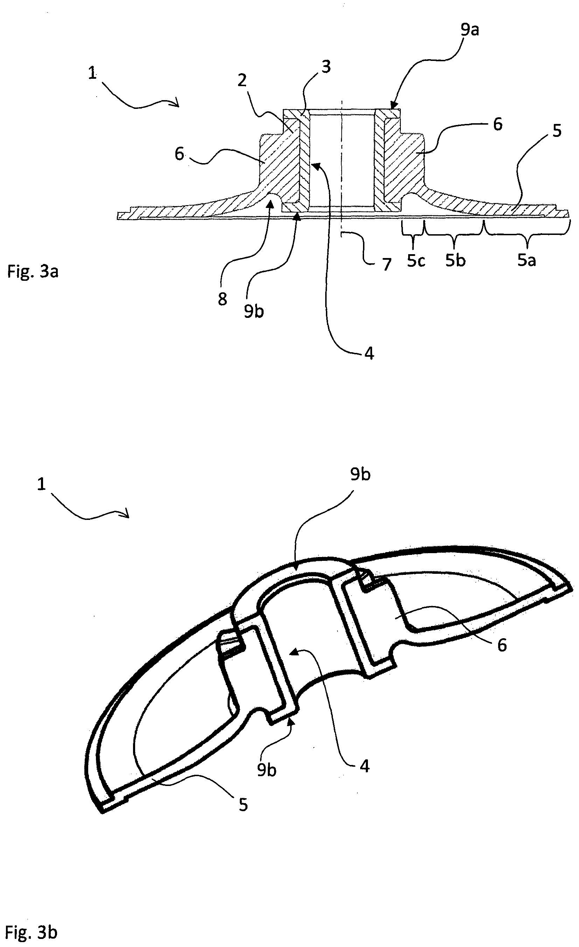

Figuren 3a und 3b zeigen eine dritte Variante einer einstückigen Lagereinheit 1 in einem axialen Querschnitt, Fig. 3a sowie in perspektivischer Halb-Schnittansicht.

Die dritte Ausführungsvariante bildet die zweite Ausführungsvariante dahingehend weiter, dass die Lagereinheit 1 an ihren beiden Stirnseiten 9a, 9b ein tribologisch wirksame Oberfläche besitzt, d.h. mit einer verschleißfesten Schicht versehen ist. Somit kann jede der beiden axialen Enden der Lagereinheit 1 ein Axiallager bilden.

Wie in den Figuren 3a und 3b ersichtlich ist, ist diese Schicht materialeinstückig mit dem das Gleitlager bildenden Kunststoffmaterial. Das Gleitlager und die beiden stirnseitigen Axiallager sind somit wie bei der zweiten Ausführungsvariante aus einem Stück. Das Gleitlager 3 bildet somit auch hier hinsichtlich seiner Form eine Art Hülse, die an ihren beiden axialen Endseiten einen radial nach außen gerichteten Kragen aufweist, der die jeweilige Stirnseite des Lagerträgers 2 formschlüssig übergreift. Entsprechend bilden diese Kragen jeweils eine Axiallagerscheibe. Insbesondere bildet im Pumpenaggregat eine Stirnseite 9a, insbesondere die dem Rotorraum zugewandte Stirnseite 9a, eine axiale Anlaufscheibe zur axialen Lagerung der Welle 20, wohingegen die andere Stirnseite 9b auf Seiten des Lagerschildes 5, die dem Pumpenraum zugewandt ist, einen feststehenden Gegenring einer Gleitringdichtung bildet.

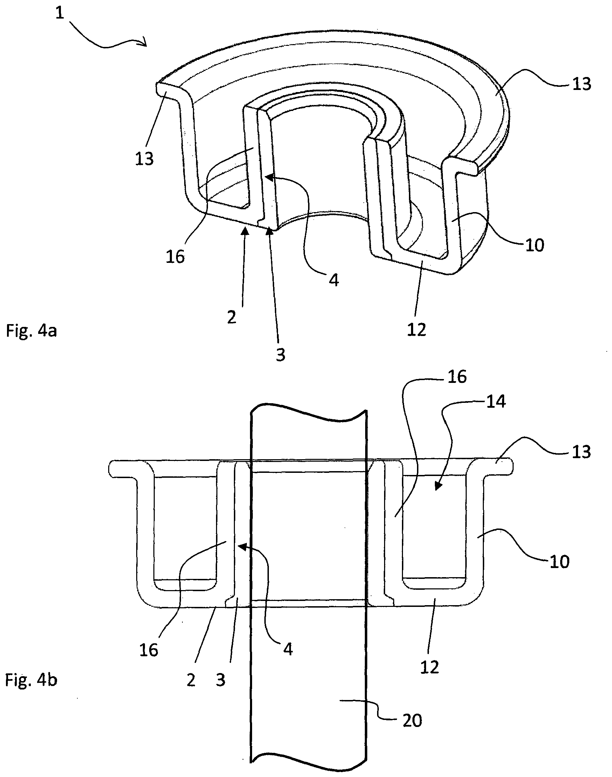

Auch diese Ausführungsvariante ist im 2-Komponenten-Sprizgießverfahren hergestellt. Das den Lagerträger 2 einschließlich Rippen 6 und Lagerschild 5 ausbildende erste Kunststoffmaterial wird von einer ersten Spritzeinheit und das das Gleitlager 3 und die beiden stirnseitigen Axiallager ausbildende zweite Kunststoffmaterial wird von einer zweiten Spritzeinheit in eine die Lagereinheit formende Kavität eines Spritzgießwerkzeugs eingebracht, wie dies oben beschrieben ist Figuren 4a und 4b zeigen eine weitere Ausführungsvariante einer einstückigen

Lagereinheit 1 für ein nicht erfindungsgemäßes Pumpenaggregat . Diese ist hutförmig und gegenüber den übrigen Varianten in den Figuren 1a bis 3b ohne Lagerschild und Rippen ausgebildet. Der Flansch ist hier durch einen Kragen 13 gebildet, wie nachstehend noch erläutert wird. Hierdurch kann diese Lagereinheit 1 sowohl an der A-Seite als auch an der B-Seite des Pumpenaggregats, d.h. an dem dem Pumpenraum zu- oder abgewandten Ende des Spaltrohres montiert werden bzw. montiert sein. Fig. 4a zeigt eine perspektivische Halbschnitt-Ansicht, Fig. 4b eine Axialschnittansicht der weiteren Ausführungsvariante.

Der Lagerträger 2 besteht aus einer zylindrischen Innenwand 16, einem ringscheibenförmigen Boden 12 und einer zur Innenwand koaxialen zylindrischen Außenwand 10. An einem axialen Ende ist die Innenwand 2 über den Boden 12 mit der Außenwand 10 verbunden. Zwischen der Innenwand 2 und der Außenwand 10 ist ein koaxialer Ringraum 14 vorhanden.

Am gegenüberliegenden Axialende weist die äußere Wand 10 einen radial nach außen abstehenden Kragen 13 auf, der den Flansch bildet. Auf der zur Welle des Pumpenaggregats gerichteten Innenseite 4 der Innenwand 16 ist stoffschlüssig die tribologisch wirksame Schicht vorhanden, die das Gleitlager 3 bildet. Diese Schicht übergreift an der Axialseite des Bodens 12 die Innenwand 16 geringfügig, so dass die radiale Dicke der Schicht dort größer ist als im axial innenliegenden Bereich des Gleitlagers 3. Am gegenüberliegenden Ende ist die Schicht nach innen hin abgefast, um ein einfaches Fügen der Welle 20 zu ermöglichen.

Auch die Ausführungsvariante nach den Figuren 4a, 4b ist im 2-Komponenten-Sprizgießverfahren hergestellt. Das das Gleitlager 3 ausbildende Kunststoffmaterial wird dabei von einer ersten Spritzeinheit und das den Lagerträger 2 ausbildende Kunststoffmaterial von einer zweiten Spritzeinheit in eine die Lagereinheit 1 formende Kavität eines Spritzgießwerkzeugs eingebracht.

Die Lagereinheit 1 aus einem tribologisch wirksamem Kunststoff oder mit einer tribologisch wirksamen Schicht hat den Vorteil, dass weniger Bauraum infolge geringerer Wandstärke für das Gleitlager im Vergleich zu herkömmlichen Gleitlagern aus Graphit oder Keramik benötigt wird.

Darüber hinaus sind geringere Toleranzen möglich, die sich im Vergleich zu einer Lagereinheit aus den einzelnen Komponenten "Gleitlager" und "Lagerträger" in der Toleranzkette addieren würden. Durch die einstückige Ausbildung der Lagereinheit entfallen Montagevorgänge, die das Einpressen eines separaten Gleitlagers zum Gegenstand haben. Da auch separate Fertigungsschritte für das Gleitlager und das Lagerschild entfallen, können die Herstellungskosten der Lagereinheit reduziert werden.

### Bezugszeichenliste

1 Lagereinheit
2 Lagerträger
3 Gleitlager
4 Innenfläche
5 Flansch, Lagerschild
5a radialen Außenbereich des Lagerschilds
5b mittleren Abschnitt des Lagerschilds
5c radial innenliegendes Ende des Lagerschilds
6 Rippen
7 Achse der Welle/ der Lagereinheit
8 Auskehlung
9a, 9b Stirnseiten der Lagereinheit
10 Außenwand
11 Profilierung
12 Boden
13 Kragen
14 Ringraum
15 Außenumfang des Lagerträgers
16 Innenwand
20 Welle

## Patentansprüche

1. Pumpenaggregat für eine Heizungs- oder Trinkwasseranlage, mit einem einen Pumpenraum begrenzenden Pumpengehäuse, einem Elektromotor und einer einen Rotor des Elektromotors tragenden Welle (20), die von zumindest einer in einem Spaltrohr, durch das ein Rotorraum des Elektromotors von einem Stator des Elektromotors hermetisch getrennt ist, befestigten Lagereinheit (1) gelagert ist, durch die sich die Welle (20) hindurch erstreckt, wobei die Lagereinheit (1) aus einem Gleitlager (3) und einem im Spaltrohr montierten Lagerträger (2) gebildet ist und einen das Gleitlager (3) bildenden, die Welle (20) lagernden inneren Bereich sowie einen den Lagerträger (2) bildenden, im Spaltrohr gehaltenen äußeren Bereich aufweist, **dadurch gekennzeichnet, dass** die Lagereinheit (1) einstückig aus Kunststoff spritzgegossen ist, und dass nur der das Gleitlager (3) bildende innere Bereich der Lagereinheit (1) eine Schicht des Lagerträgers (2) aus einem tribologisch wirksamen Material ist, wobei der Lagerträger (2) aus einem faserverstärkten ersten Kunststoffmaterial und die das Gleitlager (3) bildende Schicht aus einem zweiten Kunststoffmaterial besteht und die Kunststoffmaterialien stoffschlüssig miteinander verbunden sind, wobei der Lagerträger (2) an einer Außenseite (15) sich radial nach außen erstreckende Rippen (6) aufweist, mittels welchen er in dem Spaltrohr gehalten ist.

2. Pumpenaggregat nach Anspruch 1, **dadurch gekennzeichnet, dass** an dem Lagerträger (2) ein sich von diesem im Wesentlichen radial nach außen erstreckender Flansch (5, 13) einstückig angeformt ist.

3. Pumpenaggregat nach Anspruch 1 oder 2, **dadurch gekennzeichnet, dass** es eine Nassläuferpumpe ist.

4. Pumpenaggregat nach Anspruch 3, **dadurch gekennzeichnet, dass** die Lagereinheit (1) im Zwei-Komponenten-Spritzgussverfahren hergestellt ist, wobei das den Lagerträger (2) ausbildende Kunststoffmaterial auf das das Gleitlager (3) ausbildende Kunststoffmaterial gespritzt ist.

5. Pumpenaggregat nach einem der Ansprüche 3 oder 4, **dadurch gekennzeichnet, dass** dem das Gleitlager (3) bildenden Kunststoffmaterial Nanopartikel aus Siliziumcarbid (SiC), Titandioxid (TiO₂), Zinksulfid ( ZnS), Boroxid, Bornitrit und/ oder CNTs (Carbon Nanotubes) zugesetzt sind.

6. Pumpenaggregat nach einem der Ansprüche 3 bis 5, **dadurch gekennzeichnet, dass** dem das Gleitlager (3) bildenden Kunststoffmaterial ein Mikrofüllstoff zugesetzt ist in Form von Kugeln, Plättchen, Flocken und/ oder Fasern.

7. Pumpenaggregat nach Anspruch 6, **dadurch gekennzeichnet, dass** der Mikrofüllstoff aus einem keramischen Material besteht.

8. Pumpenaggregat nach einem der vorherigen Ansprüche, **dadurch gekennzeichnet, dass** sich die das Gleitlager (3) bildende Schicht bis auf eine oder beide axiale Stirnseite(n) der Lagereinheit (1) zur Ausbildung einer tribologisch wirksamen Axialanlauffläche (9a, 9b) erstreckt.

9. Pumpenaggregat nach einem der Ansprüche 2 bis 8, **dadurch gekennzeichnet, dass** der Lagerträger (2) und der Flansch (5, 13) in einem Spritzgussschritt aus demselben Kunststoffmaterial hergestellt sind.

10. Pumpenaggregat nach einem der Ansprüche 2 bis 9, **dadurch gekennzeichnet, dass** der Flansch (5, 13) an einem Axialende der Lagereinheit (1) angeformt ist.

11. Pumpenaggregat nach einem der vorherigen Ansprüche, **dadurch gekennzeichnet, dass** das den Lagerträger (2) bildende Kunststoffmaterial kohle-, aramid- und/ oder glasfaserverstärkt ist.

12. Pumpenaggregat nach einem der Ansprüche 2 bis 11, **dadurch gekennzeichnet, dass** der Flansch (5, 13) ein Lagerschild (5) ist, das in einem Axialschnitt eine Querschnittsform aufweist, die im radialen Außenbereich (5a) in einer Radialebene zur Achse (7) der Welle (20) liegt und die sich in einem mittleren Abschnitt (5b) von dieser Radialebene mit zunehmender Nähe zur Welle (20) entfernt, wobei die Querschnittsform an ihrem radial innenliegenden Endbereich (5c) annähernd bogenförmig in den Lagerträger (2) übergeht.

13. Pumpenaggregat nach einem der Ansprüche 2 bis 12, **dadurch gekennzeichnet, dass** eine Stirnseite (9b) des Lagerträgers (2) zumindest gegenüber einem radial innenliegenden Ende (5c) des Flansches (5, 13) in axialer Richtung vorsteht.

14. Pumpenaggregat nach einem der vorherigen Ansprüche, **dadurch gekennzeichnet, dass** der Lagerträger (2) an seiner zur Welle (20) gerichteten Innenseite eine Profilierung (11), insbesondere eine oder mehrere Nuten aufweist, die von der Schicht vollständig ausgefüllt oder formschlüssig umgeben ist/ sind.

15. Pumpenaggregat nach einem der vorherigen Ansprüche, **dadurch gekennzeichnet, dass** die Lagereinheit (1) hutförmig ausgebildet ist, wobei der Lagerträger (2) eine zylindrische Innenwand (16) und eine zylindrische Außenwand (10) aufweist, die an einem axialen Ende über einen ringförmigen Boden (12) miteinander verbunden sind, wobei zwischen der Innenwand (16) und der Außenwand (10) ein koaxialer Ringraum (14) vorhanden ist.

16. Pumpenaggregat nach Anspruch 15, sofern abhängig von Anspruch 2, **dadurch gekennzeichnet, dass** der Flansch (13) ein am gegenüberliegenden anderen axialen Ende der Außenwand (10) angeformter Kragen (13) ist.

## Claims

1. Pump assembly for a heating or drinking water system with a pump casing delimiting the pump chamber, an electric motor and a shaft (20) carrying a rotor of the electric motor, which is supported in at least one split tube that hermetically separates a rotor chamber of the electric motor from a stator of the electric motor and is mounted in a bearing unit (1) through which the shaft (20) extends, in which the bearing unit (1) is formed by a plain bearing (3) and a bearing support mounted in the split tube (2) and has an inner section forming the plain bearing (3) that supports the shaft (20) and an outer section forming the bearing support (2) held in the split tube, **characterised by** the bearing unit (1) being plastic injection moulded in one piece, and only the inner section of the bearing unit (1) forming the plain bearing (3) being a layer of a tribologically effective material of the bearing support (2), in which the bearing support (2) consists of a fibre reinforced first plastic material and the layer forming the plain bearing (3) consists of a second plastic material, and the plastic materials are connected to each other by positive substance jointing, in which the bearing support (2) has ribs (6) on an outer face (15) extending radially outwards, by means of which it is held in the split tube.

2. Pump assembly according to claim 1, **characterised by** a flange (5, 13) essentially extending radially outward from it being moulded as one piece on the bearing support (2).

3. Pump assembly according to claim 1 or 2, **characterised by** being a wet rotor pump.

4. Pump assembly according to claim 3, **characterised by** the bearing unit (1) being produced using the two-component injection moulding method, in which the plastic material forming the bearing support (2) is injected onto the plastic material forming the plain bearing (3).

5. Pump assembly according to one of the claims 3 or 4, **characterised by** nanoparticles of silicon carbide (SiC), titanium dioxide (TiO₂), zinc sulphite ( ZnS), boron oxide, boron nitrite and/or CNTs (carbon nanotubes) being added to the plastic material forming the plain bearing (3).

6. Pump assembly according to one of the claims 3 through 5, **characterised by** a microfiller in the form of spheres, plates, flakes and/or fibres being added to the plastic material forming the plain bearing (3).

7. Pump assembly according to claim 6, **characterised by** the microfiller consisting of a ceramic material.

8. Pump assembly according to one of the preceding claims, **characterised by** the layer forming the plain bearing (3) extending to one or both axial face end(s) of the bearing unit (1) to form a tribologically effective axial thrust surface (9a, 9b).

9. Pump assembly according to one of the claims 2 through 8, **characterised by** the bearing support (2) and the flange (5, 13) being made of the same plastic material in one injection moulding step.

10. Pump assembly according to one of the claims 2 through 9, **characterised by** the flange (5, 13) being moulded on one axial end of the bearing unit (1).

11. Pump assembly according to one of the preceding claims, **characterised by** the plastic material forming the bearing support (2) being reinforced with carbon, aramid and/or glass fibres.

12. Pump assembly according to one of the claims 2 through 11, **characterised by** the flange (5, 13) having a bearing shield (5) with a cross-sectional shape in an axial section that, in the radial outside section (5a), lies in one radial plane with the axis (7) of the shaft (20) and, in a centre section (5b), distances itself from this radial plane with increasing proximity to the shaft (20), in which the cross-sectional shape at its radial interior end zone (5c) transitions into the bearing support (2) in an approximate arch shape.

13. Pump assembly according to one of the claims 2 through 12, **characterised by** a face end (9b) of the bearing support (2) projecting in the axial direction beyond at least one radial inner end (5c) of the flange (5, 13).

14. Pump assembly according to one of the preceding claims, **characterised by** the bearing support (2) on its inner side facing the shaft (20) having a profile (11), notably one or more grooves that are completely filled or surrounded by the form-fitting layer.

15. Pump assembly according to one of the preceding claims, **characterised by** the bearing unit (1) being hat-shaped, in which the bearing support (2) has a cylindrical inner wall (16) and a cylindrical outer wall (10), joined to each other on one axial end by an annular bottom (12), in which there is a coaxial annular space (14) between the inner wall (16) and the outer wall (10).

16. Pump assembly according to claim 15, insofar dependent on claim 2, **characterised by** the flange (13) being a collar (13) moulded on the opposite other axial end of the outer wall (10).

## Revendications

1. Unité de pompage pour une installation de chauffage ou d'eau potable, comprenant un carter de pompe délimitant une chambre de pompe, un moteur électrique et un arbre (20) portant un rotor du moteur électrique et supporté par au moins une unité de palier montée dans une gaine séparant hermétiquement une chambre de rotor du moteur électrique d'un stator du moteur électrique, au travers duquel l'arbre (20) s'étend, sachant que l'unité de palier (1) est formée d'un palier lisse (3) et d'un support de palier (2) monté dans la gaine et comprenant une zone intérieure formant le palier lisse (3) et supportant l'arbre (20) ainsi qu'une zone extérieure formant le support de palier (2), **caractérisée en ce que** l'unité de palier (1) est moulée d'une seule pièce par injection de matière plastique, et **en ce que** seule la zone intérieure de l'unité de palier (1) formant le palier lisse (3) est une couche du support de palier (2) en un matériau tribologiquement actif, sachant que le support de palier (2) est constitué d'un premier matériau plastique renforcé par fibres et que la couche formant le palier lisse (3) est constituée d'un deuxième matériau plastique, les matériaux plastiques étant reliés entre eux par une liaison de matière, le support de palier (2) présentant sur un côté extérieur (15) des nervures (6) s'étendant radialement vers l'extérieur, au moyen desquelles il est maintenu dans la gaine.

2. Unité de pompage selon la revendication 1, **caractérisée en ce qu'**une bride (5, 13) s'étendant sensiblement radialement vers l'extérieur à partir de celle-ci est formée d'un seul tenant sur le support de palier (2).

3. Unité de pompage selon la revendication 1 ou 2, **caractérisée en ce qu'**elle est une pompe à rotor immergé.

4. Unité de pompage selon la revendication 3, **caractérisée en ce que** l'unité de palier (1) est fabriquée selon un procédé de moulage par injection à deux composants, sachant que le matériau plastique formant le support de palier (2) est moulée par injection sur le matériau plastique formant le palier lisse (3).

5. Unité de pompage selon l'une des revendications 3 ou 4, **caractérisée en ce que** le matériau plastique formant le palier lisse (3) contient des nanoparticules de carbure de silicium (SiC), dioxyde de titane (TiO₂), sulfure de zinc ( ZnS), oxyde de bore, nitrite de bore et/ou de nanotubes de carbone (CNT).

6. Unité de pompage selon l'une des revendications 3 à 5, **caractérisée en ce que** le matériau plastique formant le palier lisse (3) contient une micro-charge sous forme de billes, de plaquettes, de flocons et/ou de fibres.

7. Unité de pompage selon la revendication 6, **caractérisée en ce que** la micro-charge est en matériau céramique.

8. Unité de pompage selon l'une des revendications précédentes, **caractérisée en ce que** la couche formant le palier lisse (3) s'étend jusqu'à l'une ou aux deux faces frontales axiales de l'unité de palier (1) pour former une surface de butée axiale (9a, 9b) tribologiquement efficace.

9. Unité de pompage selon l'une des revendications 2 à 8, **caractérisée en ce que** le support de palier (2) et la bride (5, 13) sont fabriqués en une seule étape de moulage par injection à partir du même matériau plastique.

10. Unité de pompage selon l'une des revendications 2 à 9, **caractérisée en ce que** la bride (5, 13) est formée à une extrémité axiale de l'unité de palier (1).

11. Unité de pompage selon l'une des revendications précédentes, **caractérisée en ce que** le matériau plastique formant le support de palier (2) est renforcé par du carbone, de l'aramide et/ou de la fibre de verre.

12. Unité de pompage selon l'une des revendications 2 à 11, **caractérisée en ce que** la bride (5, 13) est un flasque (5) présentant, en coupe axiale, une forme de section transversale disposée, dans la zone radiale extérieure (5a), dans un plan radial par rapport à l'axe (7) de l'arbre (20) et qui, dans une section centrale (5b), s'éloigne de ce plan radial en se rapprochant de l'arbre (20), sachant que la forme de section transversale devient, au niveau de sa zone d'extrémité (5c) située radialement à l'intérieur, approximativement arquée dans le support de palier (2).

13. Unité de pompage selon l'une des revendications 2 à 12, **caractérisée en ce qu'**une face frontale (9b) du support de palier (2) fait saillie dans la direction axiale au moins par rapport à une extrémité (5c) de la bride (5, 13) située radialement à l'intérieur.

14. Unité de pompage selon l'une des revendications précédentes, **caractérisée en ce que** le support de palier (2) présente, sur sa face intérieure orientée vers l'arbre (20), un profilage (11), en particulier une ou plusieurs rainures, entièrement remplie(s) ou entourée(s) par la couche par complémentarité de forme.

15. Unité de pompage selon l'une quelconque des revendications précédentes, **caractérisée en ce que** l'unité de palier (1) est en forme de chapeau, le support de palier (2) comprenant une paroi interne cylindrique (16) et une paroi externe cylindrique (10) reliées entre elles à une extrémité axiale par un fond annulaire (12), sachant qu'un espace annulaire coaxial (14) est disposé entre la paroi interne (16) et la paroi externe (10).

16. Unité de pompage selon la revendication 15, dans la mesure où elle dépend de la revendication 2, **caractérisée en ce que** la bride (13) est une collerette (13) formée sur l'autre extrémité axiale opposée de la paroi extérieure (10).
